# DEMANDE DE BREVET EUROPEEN

(11) **EP 4 520 579 A1**
(43) Date de publication de la demande: **12.03.2025**
(21) Numéro de dépôt: 24199269.2
(22) Date de dépôt: 09.09.2024
(51) Int. Cl.: B60L 53/12, B60L 53/30

(54) **TAPIS POUR LA CHARGE INDUCTIVE D'UN VÉHICULE ÉLECTRIQUE ET ENSEMBLE COMPRENANT UNE BORNE ET UN TEL TAPIS**

(30) Priorité: 11.09.2023 FR 2309545
(71) Demandeur: Valeo eAutomotive Germany GmbH, 91056 Erlangen (DE)
(72) Inventeur: MACHADO-BAGLIETTO, Alberto, 94046 CRETEIL CEDEX (FR); MILON, David, 94046 CRETEIL CEDEX (FR)
(74) Mandataire: Valeo Powertrain Systems

(57) **Abrégé**

Tapis (102) pour la charge inductive d'un véhicule électrique, étant destiné à être posé dans ou sur le sol et à être électriquement connecté à une borne de charge (101) elle-même électriquement connectée de façon filaire à un réseau électrique, le tapis de charge (102) comprenant un corps (1, 2) portant un circuit électrique, ce dernier comprenant:
- une inductance (3, 4) apte à générer un champ magnétique pour la charge inductive du véhicule électrique, et
- un condensateur (5), formant avec l'inductance une cellule LC résonante

## Description

La présente invention concerne un tapis pour la charge inductive d'un véhicule électrique et un ensemble comprenant une borne et un tel tapis.

Le véhicule possède par exemple une batterie destinée à alimenter une machine électrique de propulsion du véhicule, cette batterie présentant une tension nominale dont la valeur peut être de 48V, ou supérieure à 60V, étant par exemple supérieure à 200V ou à 300V, étant notamment de 400V ou de 800V.Il est connu de procéder à une charge de cette batterie de façon inductive, encore appelée « sans contact », lorsque le véhicule est à l'arrêt au moyen d'une inductance disposée sur ou dans le sol qui échange de l'énergie électrique avec une inductance dans le réseau de bord du véhicule. Dans les solutions connues, il est nécessaire de prévoir, en association avec cette inductance, des composants électroniques tels que des convertisseurs de tension et des condensateurs pour que l'inductance soit alimentée de façon à transmettre le niveau de puissance voulu au véhicule, ce niveau de puissance étant par exemple compris entre 3 kW et 50 kW. Ces composants électroniques ont un coût et génèrent également un encombrement additionnel, sachant que des infrastructures pour la charge filaire sont déjà disponibles. Un exemple d'une telle solution connue dans laquelle un tapis de charge inductive est directement connecté au réseau électrique est fourni par la demande US 2021/0252992.

Il existe un besoin pour remédier à ces inconvénients.

L'invention a pour objet, de répondre à ce besoin, et elle y parvient, selon l'un de ses aspects, à l'aide d'un tapis pour la charge inductive d'un véhicule électrique, étant destiné à être posé dans ou sur le sol et à être électriquement connecté à une borne de charge elle-même électriquement connectée de façon filaire à un réseau électrique, le tapis de charge comprenant un corps portant un circuit électrique, ce dernier comprenant:
- une inductance apte à générer un champ magnétique pour la charge inductive du véhicule électrique, et
- un condensateur, formant avec l'inductance une cellule LC résonante.

Selon l'invention, le tapis, par sa coopération avec la borne de charge, peut permettre de réduire au minimum la présence dans le tapis des composants nécessaires à la charge du véhicule de façon inductive. On peut ainsi réutiliser autant que possible pour la charge inductive les composants électroniques tels que des convertisseurs de tension ou des filtres qui sont déjà prévus dans la borne de charge pour la charge filaire du véhicule. On peut ainsi permettre de faciliter la charge inductive en la rendant possible dès qu'une borne de charge filaire est présente et disponible.

Le tapis peut être posé sur le sol, étant rigidement fixé ou non sur le sol.

En variante, le tapis peut être posé dans le sol, étant complètement enterré ou seulement partiellement enterré.

Le tapis peut être rigide ou souple. Selon l'invention, « rigide » signifie que le tapis ne peut être déformé sans que cette déformation ne soit irrémédiable alors que « souple » signifie que le tapis peut être déformé et avoir la capacité de reprendre sa forme initiale lorsque la contrainte ayant généré la déformation cesse.

L'inductance et le condensateur sont par exemple disposés en série dans le circuit électrique du tapis. Le tapis peut comprendre un premier sous-corps portant l'inductance.

L'inductance comprend par exemple un noyau, notamment réalisé en ferrite, et un bobinage électrique, par exemple un fil électrique, pouvant être disposé autour de ce noyau. Le noyau en ferrite est par exemple confiné entre deux parties du premier sous-corps, ces parties étant par exemple empilées. Le noyau en ferrite est alors fixé par rapport au premier sous-corps.

En variante, le noyau de l'inductance est réalisé d'une seule pièce avec tout ou partie du premier sous-corps. Selon cette variante, cette partie du premier sous-corps peut être réalisée en un matériau chargé magnétiquement. Il s'agit par exemple de plastique chargé magnétiquement. Le choix de la charge magnétique, sa concentration et/ou sa répartition peuvent permettre d'émuler pour le noyau le comportement d'une ferrite sans que de la ferrite ne soit utilisée, tout en donnant plus de souplesse quant aux choix du facteur de forme pour le noyau. La réalisation de cette partie du sous-corps et du noyau peut par exemple se faire en une seule étape, par exemple par surmoulage sur le bobinage électrique. Le cas échéant, une autre partie du sous-corps est associée à cette réalisation en une seule pièce du noyau et d'une partie du premier sous-corps pour former le premier sous-corps. Le cas échéant encore, tout le premier sous-corps est réalisé d'une seule pièce avec le noyau à l'aide du matériau chargé magnétiquement.

Selon un premier exemple de mise en oeuvre, le premier sous-corps peut aussi porter le condensateur.

Selon ce premier exemple, le premier sous-corps peut porter tous les autres composants éventuels du tapis, le premier sous-corps définissant le corps.

En variante, toujours selon ce premier exemple, le tapis peut comprendre un deuxième sous-corps fixé au premier sous-corps et différent du premier sous-corps. Ce deuxième sous-corps peut, comme on le verra par la suite, porter d'autres composants du tapis. La fixation entre le premier sous-corps et le deuxième sous-corps est par exemple amovible, étant par exemple réalisée à l'aide de vis. Au sens de la présente demande, une fixation est dite amovible quand les deux pièces qu'elle fixe peuvent être séparées l'une de l'autre sans casser une partie de ces deux pièces. Cet exemple permet, en ayant la cellule LC résonante portée par un sous-corps distinct de celui portant les autres composants du tapis tels qu'un onduleur et/ou un redresseur, de pouvoir remplacer la cellule LC résonante ou ces autres composants indépendamment l'un de l'autre. On réduit notamment alors le coût écologique de la maintenance du tapis ou le coût de son adaptation à un niveau de puissance à échanger spécifique. Toujours selon cette variante dans laquelle le tapis comprend un deuxième sous-corps fixé au premier sous-corps et différent du premier sous-corps, le deuxième sous-corps ne porte le cas échéant pas de composants mais assure des fonctions de renfort du tapis ou de préhension du tapis, par exemple.

Selon un deuxième exemple de mise en oeuvre, le condensateur est porté par le deuxième sous-corps, ce deuxième sous-corps étant fixé au premier sous-corps et différent du premier sous-corps. Selon ce deuxième exemple également, la fixation entre le premier sous-corps et le deuxième sous-corps peut être amovible. Cet exemple permet que le remplacement de tout composant du circuit électrique du tapis de charge, autre que l'inductance, se fasse sans toucher à l'inductance.

Selon l'un ou l'autre des exemples de mise en oeuvre précités, chaque sous-corps peut être réalisé par moulage de matière. Les composants portés par chaque sous-corps sont par exemple encapsulés, autrement dit « entièrement entourés », dans la matière du sous-corps, ce qui peut permettre de confiner le bruit acoustique notamment et d'assurer une étanchéité à l'eau. Comme déjà mentionné, ces deux sous-corps peuvent être vissés entre eux.

Le premier sous-corps et le deuxième sous-corps peuvent être juxtaposés lorsque le tapis est posé dans ou sur le sol. En considérant le sol comme définissant un plan horizontal, un premier et un deuxième sous-corps juxtaposés sont décalés horizontalement. Cette juxtaposition peut se faire avec ou sans recouvrement entre le premier et le deuxième sous-corps. Cette juxtaposition permet de réduire la hauteur du tapis de charge, ce qui peut être avantageux compte-tenu de la hauteur disponible pour accueillir le tapis de charge, notamment lorsque celui-ci est posé sur le sol.

Dans ce cas, le premier sous-corps et le deuxième sous-corps peuvent être directement adjacents. L'interface entre le premier sous-corps et le deuxième sous-corps peut être une droite ou une ligne brisée définissant un motif convexe ou concave. Toute autre forme d'interface est encore possible, par exemple une courbe ou une forme combinant successivement des lignes brisées et des lignes courbes. L'interface est par exemple telle qu'une portion du premier sous-corps, respectivement du deuxième sous-corps, soit entourée, par exemple sur 180° ou plus, par une portion du deuxième sous-corps, respectivement du premier sous-corps.

En variante, le premier sous-corps et le deuxième sous-corps ne sont pas juxtaposés mais ils sont empilés lorsque le tapis est posé dans ou sur le sol. Toujours en considérant le sol comme définissant un plan horizontal, un premier et un deuxième sous-corps empilés sont décalés verticalement. Un tel empilement peut permettre de réduire la largeur du tapis de charge, ce qui peut être avantageux compte-tenu de la largeur disponible pour accueillir le tapis de charge, notamment lorsque celui-ci est posé dans le sol.

Dans cette variante, le condensateur est de préférence porté par le deuxième sous-corps, le premier sous-corps portant par exemple exclusivement l'inductance. Il est cependant possible que le premier sous-corps porte également le condensateur selon cette variante dans laquelle le premier sous-corps et le deuxième sous-corps sont empilés.

Toujours dans cette variante, le premier sous-corps et le deuxième sous-corps peuvent s'étendre dans des plans parallèles et/ou présenter exactement la même forme. L'empilement peut correspondre à une superposition exacte ou à une situation dans laquelle un des sous-corps s'étend au-delà de l'autre, par exemple.

Dans tout ce qui précède, le premier sous-corps peut être réalisé en un matériau plastique polymère comme du PVC, du plexiglas (PMMA) ou encore du PBT ou du PPS. Le matériau choisi est avantageusement non-conducteur électriquement et non-conducteur magnétiquement. Le deuxième sous-corps peut être réalisé en l'un de ces matériaux, par exemple dans le même que celui du premier sous-corps.

Dans tout ce qui précède, le circuit électrique porté par le tapis est par exemple uniquement constitué par l'inductance et le condensateur qui forment une cellule LC résonante. Le cas échéant, un capteur de courant peut également faire partie du circuit électrique porté par le tapis, ce capteur de courant fournissant la valeur du courant parcourant la cellule LC résonante. Un tel tapis est adapté à être électriquement connecté à une borne de charge déjà apte à fournir une tension alternative de façon filaire au véhicule, cette tension alternative étant adaptée et compatible pour l'alimentation de la cellule inductive pour l'échange d'énergie électrique de façon inductive.

En variante, dans tout ce qui précède, le circuit électrique peut comprendre un onduleur présentant une sortie continue, et une sortie alternative, la cellule LC résonante étant connectée à la sortie alternative de l'onduleur. Un tel tapis est adapté à être électriquement connecté à une borne de charge apte à fournir une tension continue de façon filaire au véhicule. La sortie continue de l'onduleur est alors électriquement connectée à la borne de charge.

Dans une telle variante, le tapis peut également comprendre un module de commande de l'onduleur, et une alimentation électrique de ce module de commande. Cette alimentation électrique est notamment une unité de stockage d'énergie électrique dont la tension nominale est de 12V. L'alimentation de cette unité de stockage d'énergie électrique de l'alimentation électrique s'effectue par exemple depuis la borne de charge.

Lorsqu'un onduleur est présent dans le circuit électrique du tapis, cet onduleur peut être commandé pour alimenter la cellule LC résonante avec un courant alternatif dont la fréquence est inférieure à 5 kHz, par exemple inférieure à 3kHz, ou encore inférieure à 2kHz ou 1kHz, notamment encore sensiblement égale à 400 Hz ou 50 Hz. L'invention peut alors permettre une charge inductive basse fréquence, par exemple selon l'enseignement de la demande internationale WO 2023/198926 ou de la demande FR 3 140 490. Le cas échéant, un courant alternatif dans cette plage de fréquences est déjà disponible en sortie de la borne de charge, lorsque le circuit électrique du tapis est dépourvu d'onduleur.

En variante, toujours lorsque l'onduleur est présent dans le circuit électrique du tapis, ce dernier peut être commandé pour alimenter la cellule LC résonante avec un courant alternatif dont la fréquence est de l'ordre de 85 kHz ou plus. Cette fréquence est par exemple comprise entre 79 kHz et 90 kHz

Lorsque l'onduleur est présent dans le circuit électrique du tapis, ce dernier peut être porté par le deuxième sous-corps.

Lorsque l'onduleur est présent dans le circuit électrique du tapis, ce circuit électrique peut comprendre un redresseur présentant une sortie continue apte à être électriquement connectée à la sortie continue de l'onduleur, et une sortie alternative apte à être électriquement connectée à la borne de charge. Un tel tapis est adapté à être électriquement connecté à une borne de charge fournissant un courant alternatif qui n'est pas adapté à la charge inductive. Le montage en cascade dans le circuit électrique du tapis d'un redresseur et d'un onduleur peut alors permettre de convertir ce courant alternatif disponible en sortie de la borne de charge en un courant alternatif compatible avec la charge inductive.

Lorsqu'un tel redresseur est présent, il peut être porté par le deuxième sous-corps. Un module de commande de ce redresseur peut alors être prévu dans le tapis, étant notamment porté par le deuxième sous-corps. En variante, la commande du redresseur est effectuée par le module de commande de l'onduleur.

En variante, un redresseur peut être prévu, mais il peut être disposé ailleurs que dans le tapis, dans un boîtier intermédiaire entre la borne de charge et le tapis. Ce redresseur peut alors être électriquement connecté entre la borne de charge et le tapis. Le fait de disposer le redresseur, et le cas échéant un filtre CEM associé à ce dernier, de façon déportée par rapport à la borne de charge et par rapport au tapis, peut permettre d'accroître la modularité du tapis. En effet, lorsque la borne de charge fournit une tension continue, un tapis dont le circuit électrique est dépourvu de redresseur peut être directement électriquement connecté à cette borne de charge. Lorsque la borne de charge fournit une tension alternative, ce même tapis dont le circuit électrique est dépourvu de redresseur peut toujours être électriquement connecté à cette borne de charge par l'intermédiaire du redresseur déporté précité.

Lorsqu'un redresseur est prévu, qu'il appartienne au tapis, à un boîtier intermédiaire, ou autre, le tapis peut, en complément de ce qui a été décrit ci-dessus, être connecté à une installation électrique domestique, par exemple à un tableau électrique d'habitation ou de local commercial. On accroît ainsi encore la modularité du tapis de charge.

Lorsqu'un redresseur est prévu, qu'il appartienne au tapis, à un boîtier intermédiaire, ou autre, et comme déjà mentionné, l'onduleur peut être commandé pour alimenter la cellule LC résonante avec un courant alternatif dont la fréquence est inférieure à 5 kHz, par exemple inférieure à 3kHz, ou encore inférieure à 2kHz ou 1kHz, notamment encore sensiblement égale à 400 Hz ou 50 Hz, ou être commandé pour alimenter la cellule LC résonante avec un courant alternatif dont la fréquence est de l'ordre de 85 kHz ou plus.

Dans tout ce qui précède, le tapis peut comprendre l'un au moins des composants suivants, voire la totalité des composants suivants :
- un module d'interface de communication sans fil avec le véhicule,
- un filtre CEM, et
- comme déjà mentionné, une alimentation de circuit de commande de convertisseur

Ce ou ces composants peuvent être portés par le deuxième sous-corps.

Par exemple, seule l'inductance et seul le condensateur sont portés par le premier sous-corps et tous les autres composants précités sont portés par le deuxième sous-corps.

En variante, seule l'inductance est portée par le premier sous-corps, le condensateur et tous les autres composants précités étant portés par le deuxième sous-corps.

Dans tout ce qui précède, lorsqu'un sous-corps du tapis de charge porte un élément tel que l'inductance, le condensateur, ou un composant précité, cet élément peut être rigidement fixé audit sous-corps. Cet élément est par exemple noyé dans le sous-corps ou peut faire saillie par rapport au sous-corps. Le sous-corps a par exemple une forme de plaque sur laquelle sont fixés les éléments.

Dans tout ce qui précède, le tapis peut comprendre au moins un connecteur pour la connexion filaire à la borne de charge. Par exemple, un connecteur est présent pour transmettre une haute tension au circuit électrique du tapis, et un autre connecteur est présent pour la connexion à l'alimentation électrique du module de commande lorsque cette alimentation électrique et ce module de commande sont portés par le corps. Le cas échéant, le connecteur peut également permettre un échange de signaux de commande entre la borne de charge et le tapis de charge. Le cas échéant, un autre connecteur peut être présent pour la connexion à une installation électrique domestique, comme déjà mentionné.

L'invention a encore pour objet, selon un autre de ses aspects, un ensemble pour la charge inductive d'un véhicule électrique, comprenant :
- une borne de charge apte à être électriquement connectée de façon filaire à un réseau électrique, et
- un tapis de charge tel que défini ci-dessus.

La borne comprend par exemple un boîtier et ce boîtier peut être monté sur un mur ou sur un mât. Un contacteur, un compteur et un circuit électrique sont par exemple logés dans ce boîtier.

Cette borne est électriquement connectée à un réseau filaire par un câble électrique, ce dernier véhiculant par exemple une tension de valeur efficace de 230V et de fréquence de 50Hz. Cette tension peut être monophasée ou triphasée. D'autres tensions sont possibles, par exemple une tension monophasée de valeur efficace de 120V et de fréquence de 60Hz, une tension biphasée de valeur efficace de 208V et de fréquence de 60Hz ou encore une tension triphasée de 240V et de fréquence de 60Hz. D'autres exemples sont possibles.

Le câble électrique est de préférence relié à un réseau électrique, étant par exemple un réseau électrique régional ou national. En variante, il peut s'agir d'un réseau local indépendant, comprenant par exemple une ou plusieurs batteries alimentées par des sources d'énergie telles que éoliennes, des panneaux solaires, des piles à combustible ou des générateurs d'hydroélectricité.

L'invention a encore pour objet, selon un autre de ses aspects, un procédé de fourniture d'un ensemble pour la charge inductive d'un véhicule électrique dans lequel :
- on connecte électriquement un tapis de charge à une borne de charge électriquement connectée de façon filaire à un réseau électrique, le tapis de charge comprenant un corps portant un circuit électrique, ce dernier comprenant: une inductance apte à générer un champ magnétique pour la charge inductive du véhicule électrique, et un condensateur, formant avec l'inductance une cellule LC résonante.

Le procédé peut comprendre l'étape selon laquelle on pose le tapis de charge dans ou sur le sol.

En variante, le tapis de charge peut être posé à demeure dans ou sur le sol.

Le cas échéant, la partie embarquée sur le véhicule et échangeant de l'énergie électrique sans contact par couplage inductif avec le tapis de charge peut présenter une structure similaire à celle qui vient d'être décrite, notamment une structure avec deux sous-corps assemblés de façon amovible entre eux, l'un des sous-corps portant la cellule LC résonante côté véhicule et un autre sous-corps portant les autres composants du circuit électrique côté véhicule, tel qu'un redresseur et/ou un ou plusieurs filtres.

L'invention pourra être mieux comprise à la lecture de la description qui va suivre d'exemples non limitatifs de mise en oeuvre de celle-ci et à l'examen du dessin annexé sur lequel :
[Fig.1] représente de façon schématique un ensemble selon un exemple de mise en oeuvre de l'invention comprenant une borne de charge et un tapis posé sur le sol
[Fig.2] diffère de la figure 1 par le fait que le tapis est posé dans le sol, étant partiellement enterré,
[Fig.3] diffère de la figure 1 par le fait que le tapis est posé dans le sol, étant entièrement enterré,
[Fig.4] est un exemple d'un mode de réalisation dans lequel le tapis présente un premier sous-corps et un deuxième sous-corps qui sont juxtaposés,
[Fig.5] est une variante de l'exemple de la figure 4
[Fig.6] représente une vue de dessus d'un tapis selon un mode de réalisation dans lequel le premier sous-corps et le deuxième sous-corps sont empilés,
[Fig.7] représente une vue de dessous du tapis selon le mode de réalisation de la figure 6,
[Fig.8] représente une vue en coupe selon A-A des figures 6 et 7, et
[Fig.9] représente une variante du mode de réalisation des figures 4 et 5, dans lequel le tapis présente un premier sous-corps et un deuxième sous-corps qui sont juxtaposés.

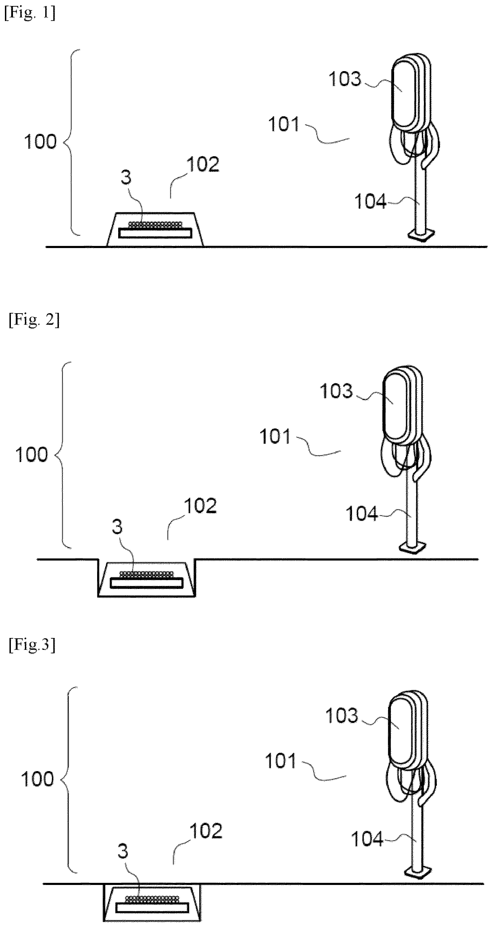

On a représenté sur la figure 1 un ensemble 100 pour la charge inductive d'un véhicule électrique. Cet ensemble 100 comprend une borne de charge 101 apte à être électriquement connectée de façon filaire à un réseau électrique, et un tapis de charge 102 représenté très schématiquement sur les figures 1 à 3.

La borne 101 comprend dans l'exemple considéré un boîtier 103 qui est ici monté sur un mât 104. Dans un autre exemple non représenté, le boîtier 103 pourrait être monté sur un mur. Le boîtier 103 renferme des composants classiques d'une borne de charge, tels qu'un contacteur, un compteur et un circuit électrique.

La borne 101 est électriquement connectée à un réseau filaire par un câble électrique, ce dernier véhiculant par exemple une tension de valeur efficace de 230V et de fréquence de 50Hz. Cette tension peut être monophasée ou triphasée.

Sur la figure 1, le tapis de charge 102 est posé sur le sol. Le tapis de charge 102 est par exemple maintenu sur le sol par son propre poids ou encore par une fixation amovible. En variante, il est monté à demeure sur le sol.

Sur la figure 2, le tapis de charge 102 est posé dans le sol, étant partiellement enterré dans le sol alors que sur la figure 3, le tapis de charge est complètement enterré dans le sol.

Le tapis 102 des figures 1 à 3 peut être rigide ou souple.

Le tapis 102 des figures 1 à 3 est électriquement connecté à la borne de charge 101 par une connexion filaire, bien que cette connexion ne soit pas représentée. Cette connexion filaire met en oeuvre une connexion de puissance 12 pour fournir le signal de puissance nécessaire à la charge et, le cas échéant, une connexion de commande pour fournir le signal de commande nécessaire au(x) convertisseurs de tension embarqués dans le tapis de charge 102, lorsqu'un tel ou de tels convertisseurs sont présents dans le tapis de charge 102. Cette connexion de commande peut être une alimentation basse tension, par exemple une tension continue de 12V.

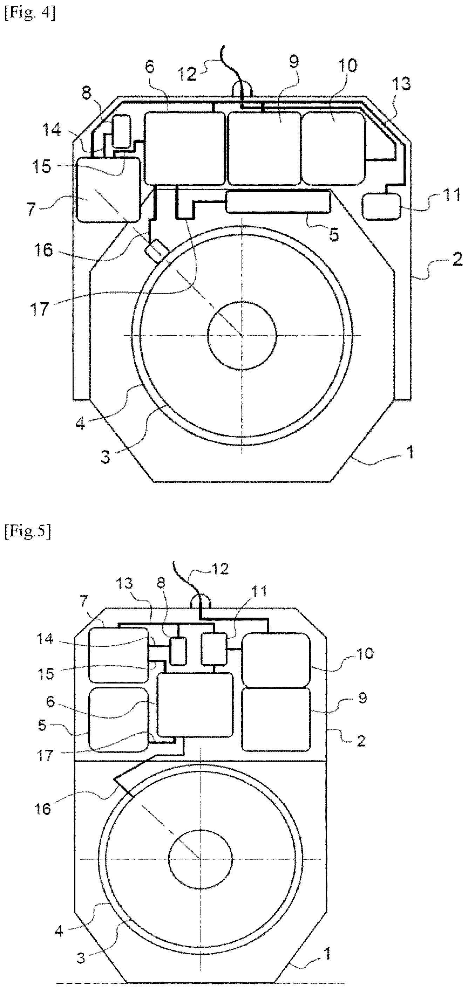

On va maintenant décrire en référence aux figures 4 à 9 différents exemples de réalisation de tapis de charge 102 selon l'invention.

Dans ces exemples, le tapis de charge 102 présente un corps portant un circuit électrique. Dans tous les exemples décrits, le circuit électrique comprend au moins une inductance apte à générer un champ magnétique pour la charge inductive du véhicule électrique, et un condensateur 5, formant avec l'inductance une cellule LC résonante. L'inductance est ici formée par un noyau 4, notamment en ferrite ou en plastique chargé magnétiquement, et un bobinage électrique 3, par exemple un fil électrique bobiné autour du noyau ou des pistes électriquement conductrices. D'autres façons de réaliser l'inductance sont couvertes par l'invention.

L'inductance 3, 4 et le condensateur 5 sont ici disposés en série.

Dans ces exemples décrits, et bien que cela ne soit pas limitatif, le corps est réalisé en deux parties, avec un premier sous-corps 1 et un deuxième sous-corps 2.

Ces premier 1 et deuxième sous-corps 2 sont ici distincts et fixés l'un à l'autre, par une fixation amovible ou non. Le premier sous-corps 1 est par exemple réalisé en un matériau plastique polymère comme du PVC, du plexiglas (PMMA) ou encore du PBT ou du PPS. Le deuxième sous-corps 2 est dans l'exemple considéré en l'un de ces matériaux, par exemple dans le même que celui du premier sous-corps 1. Lorsque le noyau 4 est réalisé en plastique chargé magnétiquement, le noyau 4 et tout ou partie du premier sous-corps 1 peuvent être réalisés d'une seule pièce, par exemple par surmoulage sur le bobinage électrique 3.

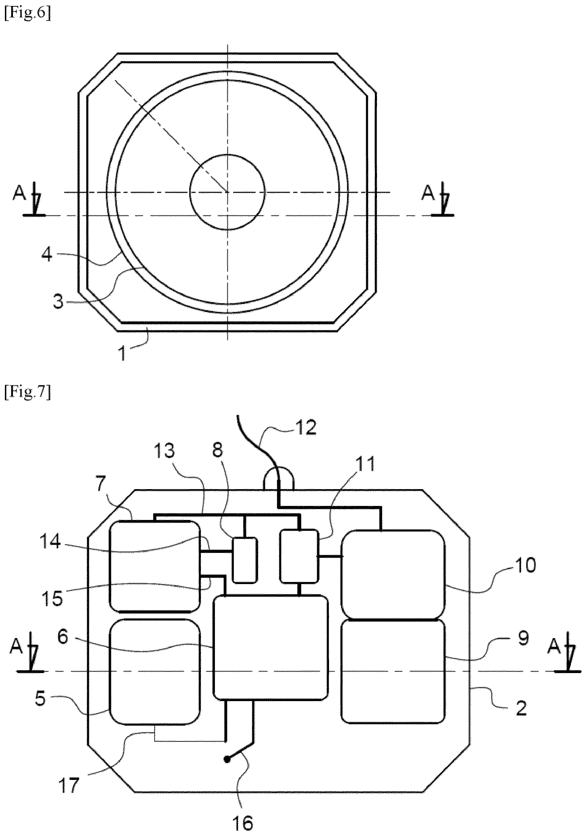

Comme on le verra par la suite en référence aux figures 4, 5 et 9, le premier sous-corps 1 et le deuxième sous-corps 2 peuvent être juxtaposés lorsque le tapis est posé dans ou sur le sol. En variante, et comme on le verra par la suite en référence aux figures 6 à 8, le premier sous-corps 2 et le deuxième sous-corps 3 peuvent être empilés lorsque le tapis 102 est posé dans ou sur le sol.

Indépendamment de la façon dont le premier sous-corps 1 et le deuxième sous-corps 2 sont disposés l'un par rapport à l'autre, le premier sous-corps 1 peut porter et l'inductance et le condensateur 5, ou porter seulement l'inductance, le condensateur 5 étant alors porté par le deuxième sous-corps.

L'invention n'est pas limitée à l'exemple dans lequel le circuit électrique du tapis de charge serait uniquement constitué par la cellule LC résonante.

Le circuit électrique du tapis 102 peut comprendre en outre un onduleur 6 présentant une sortie continue connectée électriquement à la borne de charge 101, et une sortie alternative connectée à la cellule LC résonante. Le tapis peut alors intégrer un module de commande 7 de l'onduleur 6, et une alimentation électrique 11 de ce module de commande 7. L'alimentation électrique 11 est dans les exemples considérés reliée au module de commande 7 par une connexion 13 étant un fil électrique, une barre bus rigide ou une piste de carte de circuit imprimé, par exemple. Cette alimentation électrique est ici une batterie dont la tension nominale est de 12V et qui est chargée depuis la borne de charge 101 par la connexion de commande, ou une source de tension réalisée à l'aide de cette connexion de commande.

Le module de commande 7 peut commander les interrupteurs électroniques de l'onduleur 6, ces derniers étant par exemple des transistors MOS ou IGBT de manière à générer un courant alternatif dont la fréquence est inférieure à 5 kHz, par exemple inférieure à 3kHz, ou encore inférieure à 2kHz ou 1kHz, notamment encore sensiblement égale à 400 Hz ou 50 Hz, pour alimenter la cellule LC résonante La commande de l'onduleur 6 par le module de commande 7 s'effectue par une connexion 15, étant par exemple un fil électrique, une barre bus rigide ou une piste de carte de circuit imprimé, par exemple. On peut aussi utiliser pour réaliser la connexion 15 une solution de type Bal Spring^{®} commercialisée par la société Bal Seal Engineering^{™}.

Lorsque l'onduleur 6 est embarqué sur le tapis de charge 102, le circuit électrique peut encore comprendre un redresseur 9, ainsi le cas échéant qu'un filtre CEM 10, ce dernier permettant de traiter le courant de mode commun et le courant de mode différentiel en amont de la sortie alternative du redresseur 9. Les interrupteurs du redresseur 9, lorsqu'ils sont commandables, peuvent alors être commandés par le module de commande 7, ou par un module de commande dédié au redresseur 9.

Le cas échéant, le corps porte encore un module 8 d'interface de communication sans fil avec le véhicule et une connexion 14, par exemple filaire, permettant l'échange de données entre ce module 8 d'interface de communication sans fil et le module de commande 7 précité.

La jonction du reste du circuit électrique porté par le corps avec la cellule LC résonante s'effectue par exemple via deux fils respectifs 16 et 17 ou via deux barres bus rigides, par exemple.

Dans l'exemple des figures 4 et 5, le premier sous-corps 1 et le deuxième sous-corps 2 sont juxtaposés.

On constate que, dans l'exemple de la figure 4, l'interface entre le premier sous-corps 1 et le deuxième sous-corps 2 est une succession de lignes brisées définissant un motif concave. Ce motif concave est tel que la portion du premier sous-corps 1 portant l'inductance 3,4 est entourée sur plus de 180° par le deuxième sous-corps 2. Les composants portés par le deuxième sous-corps 2 sont ici disposés les uns à la suite des autres le long d'une partie du pourtour de l'inductance 3, 4.

On constate par ailleurs sur la figure 4 que le premier sous-corps 1 ne porte ici que l'inductance 3, 4 et le condensateur 5, tandis que l'onduleur 6, son module de commande 7, le redresseur 9, le filtre CEM 10, l'alimentation électrique 11 du module de commande 7, et le module 8 d'interface de communication sans fil avec le véhicule sont portés par le deuxième sous-corps 2.

La variante de la figure 5 diffère de ce qui est représenté sur la figure 4 par le fait que le condensateur 5 est porté par le deuxième sous-corps 2 et par la forme de l'interface entre le premier sous-corps 1 et le deuxième sous-corps 2 qui est ici une droite. Sur la figure 5, le premier sous-corps 1 porte uniquement le noyau 4 et le bobinage électrique 3 de l'inductance.

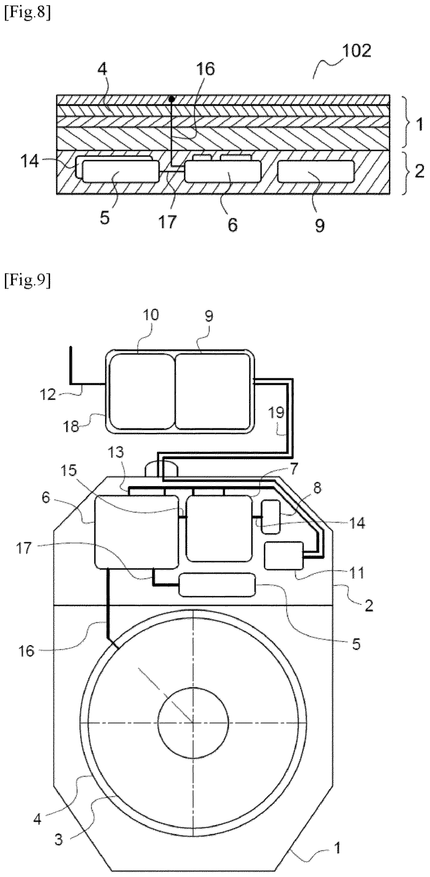

La variante de la figure 9 diffère de celle des figures 4 et 5 par le fait que le redresseur 9 et le filtre CEM 10, bien que présents, ne sont ni dans le tapis 102, ni dans la borne 101. Ils sont ici reçus dans un boîtier intermédiaire 18, électriquement connecté à la borne de charge 101 par la connexion de puissance 12 et au tapis de charge 102 par une connexion de puissance 19, ces connexions 12 et 19 étant ici filaires. Comme on peut le voir, une connexion de commande existe également entre l'alimentation électrique 11 et le boîtier 18 pour la commande des interrupteurs électroniques du redresseur 9. Dans cette variante de la figure 9, le condensateur 5 est porté par le deuxième sous-corps 2 et l'interface entre le premier sous-corps 1 et le deuxième sous-corps 2 est une droite. Dans une variante de ce qui est représenté sur la figure 9, le condensateur 5 pourrait être porté par le premier sous-corps 1 et l'interface entre le premier sous-corps 1 et le deuxième sous-corps 2 pourrait définir un motif concave, similairement à ce qui a été représenté en figure 4.

Dans l'exemple des figures 6 à 8, le premier sous-corps 1 et le deuxième sous-corps 2 sont empilés, comme cela est apparent sur la figure 8. On constate sur la figure 8 que le premier sous-corps 1 et le deuxième sous-corps 3 peuvent avoir des formes identiques, et être empilés de manière à présenter une superposition exacte. Toujours dans l'exemple des figures 6 à 8, le condensateur 5 est porté par le deuxième sous-corps 2, de sorte que le premier sous-corps 1 ne porte que l'inductance. Dans une variante d'empilement non représentée, le condensateur 5 est aussi porté par le premier sous-corps 1.

L'invention n'est pas limitée à ce qui vient d'être décrit.

Par exemple, que le redresseur 9 et/ou l'onduleur 6 soit ou non présent dans le circuit électrique du tapis de charge 102, l'inductance 3, 4 peut être parcourue par un courant alternatif dont la fréquence est de l'ordre de 85 kHz ou plus.

Dans un autre exemple non décrit, l'inductance est contenue dans deux sous-corps différents : un sous-corps qui encapsule ou non le noyau 4 et, un autre sous-corps qui encapsule ou non le bobinage électrique 3. L'un de ces sous-corps porte le cas échéant le condensateur 5 ou le condensateur 5 est porté par encore un autre sous-corps.

## Revendications

1. Tapis (102) pour la charge inductive d'un véhicule électrique, étant destiné à être posé dans ou sur le sol et à être électriquement connecté à une borne de charge (101) elle-même électriquement connectée de façon filaire à un réseau électrique, le tapis de charge (102) comprenant un corps (1, 2) portant un circuit électrique, ce dernier comprenant:
- une inductance (3, 4) apte à générer un champ magnétique pour la charge inductive du véhicule électrique, et
- un condensateur (5), formant avec l'inductance une cellule LC résonante.

2. Tapis selon la revendication 1, le corps comprenant un premier sous-corps (1) portant l'inductance (3, 4).

3. Tapis selon la revendication 2, le corps comprenant un deuxième sous-corps (2) fixé au premier sous-corps (1) et différent du premier sous-corps (1).

4. Tapis selon la revendication 2 ou 3, le premier sous-corps (1) portant également le condensateur (5).

5. Tapis selon la revendication 3 ou 4, le premier sous-corps (1) et le deuxième sous-corps (2) étant juxtaposés lorsque le tapis (102) est posé dans ou sur le sol.

6. Tapis selon la revendication 5, le premier sous-corps (1) et le deuxième sous-corps (2) étant directement adjacents, l'interface entre le premier sous-corps (1) et le deuxième sous-corps (2) étant notamment une droite ou une ligne brisée définissant une surface convexe ou concave.

7. Tapis selon l'une quelconque des revendications 2 à 4, le premier (1) et le deuxième (2) sous-corps étant empilés lorsque le tapis (102) est posé dans ou sur le sol.

8. Tapis selon l'une quelconque des revendications précédentes, le circuit électrique comprenant un onduleur (6) présentant une sortie continue, et une sortie alternative, la cellule LC résonante étant connectée à la sortie alternative de l'onduleur (6).

9. Tapis selon l'une quelconque des revendications 3 à 7 et selon la revendication 8, le deuxième sous-corps (2) portant l'onduleur (6).

10. Tapis selon les revendications 4 et 9, le premier sous-corps (1) et le deuxième sous-corps (2) étant fixés entre eux de façon amovible.

11. Tapis selon l'une quelconque des revendications 8 à 10, le circuit électrique comprenant un redresseur (9) présentant une sortie continue apte à être électriquement connectée à la sortie continue de l'onduleur (6) et une sortie alternative apte à être électriquement connectée à la borne de charge (101), le deuxième sous-corps (2) portant notamment le redresseur (9).

12. Tapis selon l'une quelconque des revendications précédentes, comprenant l'un au moins des composants suivants :
- un module (8) d'interface de communication sans fil avec le véhicule,
- un filtre CEM (10)
- une alimentation électrique (11) de circuit de commande de convertisseur,
le deuxième sous-corps (2) portant notamment ledit composant (8, 10, 11).

13. Ensemble (100) pour la charge inductive d'un véhicule électrique, comprenant :
- une borne de charge (101) apte à être électriquement connectée de façon filaire à un réseau électrique, et
- un tapis de charge (102) selon l'une quelconque des revendications précédentes.

14. Procédé de fourniture d'un ensemble pour la charge inductive d'un véhicule électrique dans lequel :
- on connecte électriquement un tapis de charge (102) à une borne de charge (101) électriquement connectée de façon filaire à un réseau électrique, le tapis de charge (102) comprenant un corps (1, 2) portant un circuit électrique, ce dernier comprenant: une inductance (3, 4) apte à générer un champ magnétique pour la charge inductive du véhicule électrique, et un condensateur (5), formant avec l'inductance une cellule LC résonante.

15. Procédé selon la revendication 14, comprenant l'étape selon laquelle on pose le tapis de charge (102) dans ou sur le sol.
